# FASCICULE DE BREVET EUROPEEN

(11) **EP 0 515 278 B1**
(45) Date de publication et mention de la délivrance du brevet: **21.02.1996**
(21) Numéro de dépôt: 92401396.4
(22) Date de dépôt: 21.05.1992
(51) Int. Cl.: G01M 9/02

(54) **Dispositif de simulation de sol défilant dans des souffleries aérodynamiques**
Vorrichtung zur Simulation von durchlaufendem Grund in aerodynamischen Windkanälen
Device for simulating ground movement in aerodynamic wind tunnels

(30) Priorité: 24.05.1991 FR 9106287
(43) Date de publication de la demande: 25.11.1992
(73) Titulaire: E.R.é.M.E., F-92300 Levallois-Perret (FR)
(72) Inventeur: Menard, Maurice Louis Armand, F-78330 Fontenay-le-Fleury (FR); Bellanger, Jacques Maurice François, F-78390 Bois d'Arcy (FR)
(74) Mandataire: Jacquelin, Marc-Henri

(56) Documents cités:
- FR-A- 2 633 045
- GB-A- 2 142 290
- GB-A- 2 177 661
- SOVIET PATENTS ABSTRACTS, Section EI, Week 8543, 29 novembre 1986, Derwent Publications Ltd., London, GB; Class S, AN 85-268954/43 & SU-A-1151848

## Description

On sait que les souffleries aérodynamiques ont pour but de simuler l'écoulement qui prend naissance autour d'un mobile qui se déplace dans un gaz, en admettant une équivalence, qui tient compte de divers facteurs correctifs d'échelle, entre le déplacement de ce mobile dans le gaz au repos, et le déplacement de ce gaz autour d'un objet fixe, appelé ci-après "maquette" et qui peut être soit le mobile réel, soit une maquette du mobile.

Lorsqu'il s'agit de souffleries destinées à des essais de simulation d'un mobile (soit mobile réel, soit maquette du mobile) se déplaçant loin du sol, on dispose la maquette à essayer le plus loin possible des parois de la veine d'essais de la soufflerie et on élimine, ou tout au moins on diminue, les effets de la couche limite qui se développe sur ces parois.

Lorsqu'il s'agit d'une soufflerie destinée à des essais de maquette se déplaçant à proximité du sol (véhicules terrestres, véhicules aériens en phase de décollage ou d'atterrissage, véhicules sur coussins d'air), la maquette doit obligatoirement être disposée à proximité d'une paroi de la veine d'essais simulant le sol.

C'est ainsi qu'ont été réalisées la plupart des souffleries classiques comme cela est indiqué dans le préambule de la revendication 1.

L'équivalence entre la réalité (mobile se déplaçant à proximité du sol dans un gaz au repos) et les conditions d'essais (maquette fixe dans l'écoulement de gaz dans la veine d'essais) ne sont alors plus réalisées en raison de la couche limite qui se développe pendant l'essai sur la paroi simulant le sol, couche limite qui n'existe pas dans la réalité.

Pour s'affranchir des effets perturbateurs de cette couche limite on a proposé diverses solutions.

L'une de ces solutions dite des "maquettes images" consiste à disposer dans la région centrale de la veine d'essais, c'est-à-dire loin des parois, deux maquettes séparées par un plan de symétrie fictif qui simule le sol.

L'avantage de cette solution provient du fait qu'elle ne nécessite que peu d'investissements financiers ; l'un de ses inconvénients majeurs réside dans le fait que dans la partie arrière de cette double maquette se développent des tourbillons qui n'ont rien à voir avec la réalité, ce qui fausse les résultats que l'on peut tirer d'essais menés en appliquant une telle solution.

Une autre de ces solutions dite du "tapis roulant" consiste à prévoir des moyens mécaniques pour que la paroi de la veine d'essais simulant le sol soit animée d'une vitesse de défilement correspondant à la vitesse de l'écoulement de gaz dans la veine.

Cette solution, séduisante en théorie car elle élimine alors la couche limite (si la vitesse de la paroi est égale à la vitesse de l'écoulement de gaz dans la veine), pose de très gros problèmes de réalisation dès que les vitesses à simuler sont importantes, et surtout dès que, pour des raisons d'échelle, on doit faire appel à des maquettes de relativement grandes dimensions.

Encore une autre solution dite "aspiration ou soufflage" consiste à aspirer ou à souffler la couche limite se développant sur la paroi de la veine d'essais simulant le sol.

C'est ainsi que le brevet FR 2 633 045 décrit une soufflerie dans laquelle les parois présentent une porosité réglable par laquelle il est possible de procéder à une aspiration de la couche limite.

De même le brevet GB 2 142 290 décrit une soufflerie dont la veine d'essai comporte au moins une paroi munie de dispositifs d'aspiration pour la couche limite, débouchant chacun dans une chambre d'aspiration.

Cependant, aspiration ou soufflage de la couche limite, posent les problèmes suivants :
- une aspiration de la couche limite en amont de la maquette modifie localement l'écoulement mais la couche limite se développe à nouveau en aval du dispositif d'aspiration. Le procédé ne peut pas être appliqué s'il s'agit de maquettes longues (trains ferroviaires ou trains routiers) ou s'il s'agit de maquette très près de la paroi (voitures de formule 1).
- un soufflage de la couche limite en amont de la maquette introduit un débit supplémentaire qui augmente le débit général de la soufflerie et qui rend difficile l'évaluation de la vitesse dans le canal formé par le carénage inférieur de la maquette et la paroi simulant le sol ; on retrouve là aussi l'impossibilité pratique de faire appel au soufflage de la couche limite dans les cas de maquettes longues ou de maquettes devant être situées très près de la paroi.

L'invention a pour but de supprimer les inconvénients rappelés ci-dessus en proposant une solution nouvelle dite "simulation aérodynamique améliorée".

Selon l'invention on constitue la paroi de la veine d'essais représentant le sol par une succession de cellules indépendantes comportant chacune au moins un orifice d'aspiration, et au moins un orifice de soufflage situé soit en aval soit en amont de l'orifice d'aspiration et alimenté, par l'intermédiaire d'au moins un ventilateur par le gaz aspiré par l'orifice d'aspiration.

De préférence, l'orifice d'aspiration débouche dans un caisson d'aspiration et l'orifice de soufflage est alimenté par un caisson de soufflage.

Selon une première disposition on peut prévoir un ventilateur entre chaque caisson d'aspiration et le caisson de soufflage correspondant immédiatement en aval, des moyens de réglage pouvant alors être associés à chaque ventilateur, contrôlant ainsi le débit aspiré et soufflé dans chaque cellule.

Selon une autre disposition, on peut prévoir un seul ventilateur dont l'admission est reliée par un jeu de conduits et de vannes aux caissons d'aspiration et dont le refoulement est relié par un jeu de conduits et de vannes aux caissons de soufflage, des moyens de réglage pouvant alors être associés à chaque vanne, contrôlant ainsi le débit aspiré et soufflé dans chaque cellule.

En ce qui concerne les orifices d'aspiration et de soufflage, ils sont avantageusement agencés sous forme de fentes s'étendant transversalement, inclinées vers l'amont d'un angle composé entre 15° et 60° (de préférence de l'ordre de 38°) pour la fente d'aspiration, et inclinées vers l'aval d'un angle compris entre 0° et 90° (de préférence de l'ordre de 45°) pour la fente de soufflage.

Grâce à l'invention on redonne localement au gaz l'énergie qu'il a perdu dans les phénomènes de frottement visqueux qui se développent au voisinage de la paroi dans chaque zone qui sépare l'orifice d'aspiration de l'orifice de soufflage.

On peut ainsi réaliser, par une succession de cellules (orifice d'aspiration - orifice de soufflage) une paroi aussi longue que nécessaire pour la dimension longitudinale de la maquette, et le long de laquelle il ne se développe pratiquement aucune couche limite, l'écoulement autour de la maquette étant exempt des perturbations causées par les solutions antérieures connues rappelées ci-dessus.

Par ailleurs, le coût de réalisation d'une soufflerie selon l'invention reste très abordable et demande des moyens sensiblement inférieurs à ceux de la solution antérieure connue dite "tapis roulant"

L'invention consiste, mise à part les dispositions dont il vient d'être question ci-dessus, en certaines autres dispositions qui s'utilisent de préférence en même temps, et dont il sera plus explicitement question ci-après.

L'invention pourra, de toute façon, être bien comprise à l'aide du complément de description qui suit, ainsi que des dessins ci-annexés, lesquels, complément et dessins, sont relatifs à des modes de réalisation préférentiels de l'invention et ne comportent, bien entendu, aucun caractère limitatif.

La figure 1 de ces dessins, est une coupe schématique axiale de la veine d'essais d'une soufflerie établie conformément à un premier mode de réalisation de l'invention.

La figure 2 est une vue en coupe à échelle agrandie d'une cellule constituant la paroi simulant le sol de la veine d'essais de la soufflerie selon l'invention.

La figure 3 est la même vue que celle montrée sur la figure 2, mais avec des positions différentes des éléments mécaniques délimitant les orifices d'aspiration et de soufflage.

La figure 4 est une vue en coupe à échelle encore plus grande d'un orifice d'aspiration.

La figure 5 représente, à la même échelle que la figure 4, une coupe d'un orifice de soufflage.

La figure 6 montre, dans les mêmes conditions que sur les figures 2 et 3 et en coupe partielle, une variante de réalisation de la paroi simulant le sol de la veine d'essais de la soufflerie selon l'invention.

La figure 7, enfin, est une coupe schématique axiale de la veine d'essais d'une soufflerie établie conformément à un autre mode de réalisation de l'invention.

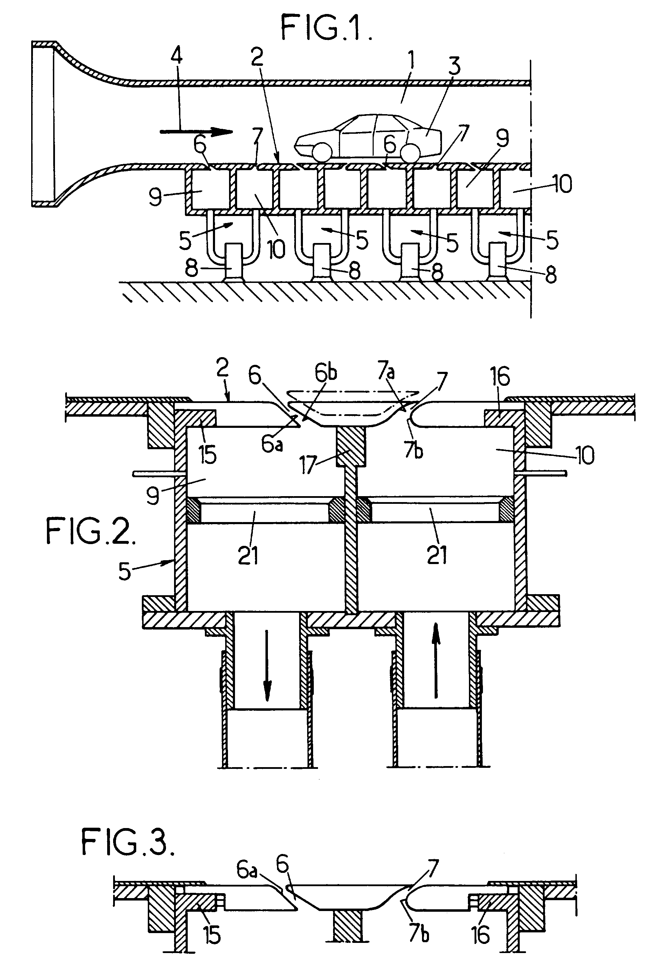

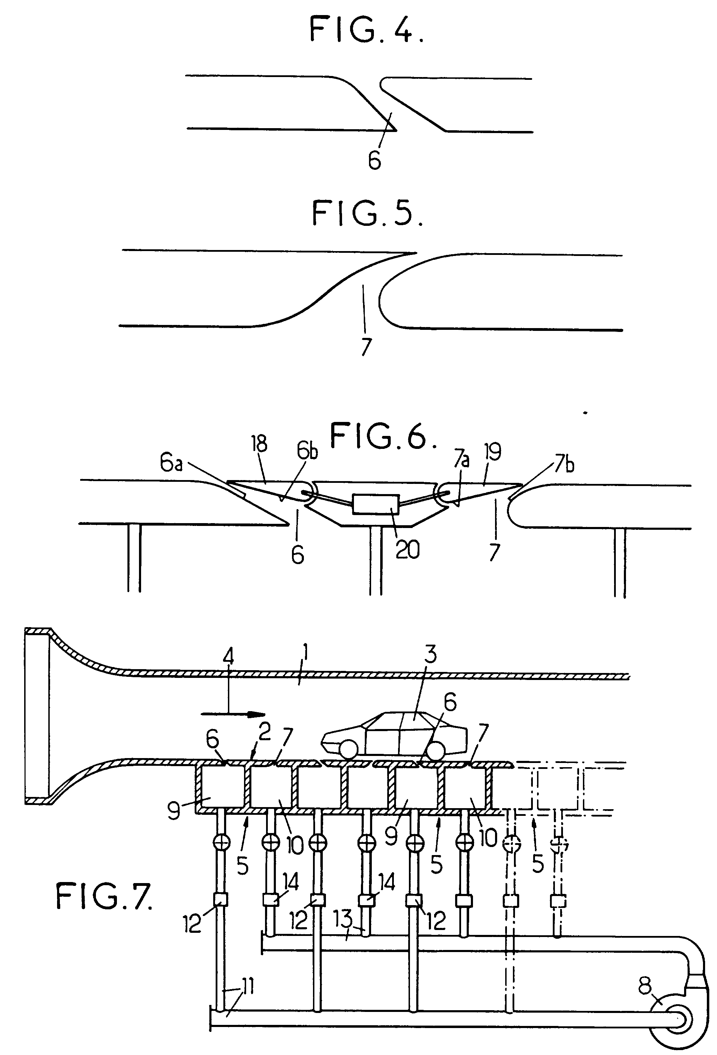

Sur les figures 1 et 7, on a représenté uniquement la veine d'essais 1 d'une soufflerie dont les autres éléments constitutifs sont suffisamment connus pour qu'il ne soit pas nécessaire de les décrire en détail.

Cette veine d'essais 1 comporte une paroi 2 simulant le sol et à proximité de laquelle est disposée la maquette d'essais 3, cette maquette 3 pouvant être maintenue à une distance appropriée de cette paroi 2 ou reposer sur cette paroi 2.

On a supposé que cette maquette 3 était celle d'un véhicule automobile dont les roues reposent sur la paroi 2 simulant le sol ; s'il s'était agi d'une maquette d'essais d'un véhicule aérien en phase de décollage ou d'atterrissage, ou d'un véhicule sur coussin d'air, des moyens seraient prévus pour maintenir la maquette à proximité de la paroi simulant le sol, à la distance requise pour les essais.

La flèche 4 indique l'écoulement du gaz dans la veine d'essais 1.

Selon l'invention, la paroi 2 de la veine d'essais 1 simulant le sol est constituée par une succession de cellules 5 comportant chacune au moins un orifice d'aspiration 6, et au moins un orifice de soufflage 7 situé en aval de l'orifice d'aspiration 6 et alimenté par l'intermédiaire d'au moins un ventilateur 8 par le gaz aspiré par l'orifice d'aspiration 6.

De préférence, l'orifice d'aspiration 6 débouche dans un caisson d'aspiration 9 et l'orifice de soufflage 7 est alimenté par un caisson de soufflage 10.

On peut donc prévoir, pour régler le débit aspiré et le débit soufflé :
- comme montré sur la figure 1, un ventilateur 8 entre chaque caisson d'aspiration 9 et le caisson de soufflage 10 correspondant immédiatement en aval, des moyens de réglage (non représentés) pouvant alors être associés à chaque ventilateur 8, contrôlant ainsi le débit aspiré et soufflé dans chaque cellule 5 ;
- comme montré sur la figure 7, un seul ventilateur 8 dont l'admission est reliée par un jeu de conduits 11 et de vannes 12 aux caissons d'aspiration 9 et dont le refoulement est relié par un jeu de conduits 13 et de vannes 14 aux caissons de soufflage 10, des moyens de réglage (non représentés) pouvant alors être associés à chaque vannes 12 et 14, contrôlant ainsi le débit aspiré et soufflé dans chaque cellule 5.

En ce qui concerne les orifices d'aspiration 6 et de soufflage 7, ils sont avantageusement agencés sous forme de fentes s'étendant transversalement (fig. 4 et 5).

Les fentes d'aspiration 6 sont inclinées vers l'amont d'un angle compris entre 15° et 60°, et avantageusement de l'ordre de 38°.

Les fentes de soufflage 7 sont inclinées vers l'aval d'un angle compris entre 0° et 90°, et avantageusement de l'ordre de 45°.

La fente d'aspiration 6 est de préférence agencée sous forme d'un canal divergent ouvert d'un angle de l'ordre de 13°.

La fente de soufflage 7 est de préférence agencée sous forme d'un canal convergent profilé.

Pour régler la vitesse de l'écoulement aspiré et de l'écoulement soufflé on peut avoir recours à différentes réalisations.

Selon l'une de ces réalisations (Fig.2 et 3) on prévoit que la paroi amont 6a de la fente d'aspiration 6 et la paroi aval 7b de la fente de soufflage 7 soient déplaçables axialement (parallèlement à l'écoulement du gaz 4) sous l'action d'un mécanisme, respectivement 15 pour la fente d'aspiration 6 et 16 pour la fente de soufflage 7.

Selon une autre de ces réalisations (fig. 2) on prévoit que la paroi aval 6b de la fente d'aspiration 6 et la paroi amont 7a de la fente de soufflage 7 soient déplaçables transversalement (perpendiculairement à l'écoulement de gaz 4) sous l'action d'un mécanisme 17.

Selon encore une autre de ces réalisations (fig.6) la partie amont de la paroi aval 6b de la fente d'aspiration 6 est constituée par un volet mobile 18, et la partie aval de la paroi amont 7a de la fente de soufflage 7 est constituée par un volet mobile 19, un mécanisme 20 étant prévu pour l'actionnement de ces deux volets mobiles 18 et 19.

Pour homogénéiser l'écoulement dans les caissons d'aspirations 9 et de soufflage 10 il peut avantageusement être prévu une paroi perméable 21 disposée dans la région médiane de chaque caisson (fig.2).

Comme il va de soi et comme il résulte d'ailleurs déjà de ce qui précède, l'invention ne se limite nullement à ceux de ses modes d'application et de réalisaion qui ont été plus particulièrement envisagés ; elle en embrasse, au contraire, toutes les variantes.

## Revendications

1. Soufflerie aérodynamique destinée à des essais de simulation d'un mobile se déplaçant à proximité du sol, comportant une veine d'essai (1) présentant une paroi (2) simulant le sol et à proximité de laquelle est disposée une maquette d'essais (3), caractérisée par le fait que la susdite paroi (2) simulant le sol est constituée par une succession de cellules indépendantes (5) comportant chacune au moins un orifice d'aspiration (6) et au moins un orifice de soufflage (7) situé soit en aval soit en amont de l'orifice d'aspiration (6) et alimenté par l'intermédiaire d'au moins un ventilateur (8) par le gaz aspiré par l'orifice d'aspiration (6).

2. Soufflerie selon la revendication 1, caractérisée par le fait que l'orifice d'aspiration (6) débouche dans un caisson d'aspiration (9) et l'orifice de soufflage (7) est alimenté par un caisson de soufflage (10).

3. Soufflerie selon la revendication 2 caractérisée par le fait qu'il est prévu un ventilateur (8) entre chaque caisson d'aspiration (9) et le caisson de soufflage (10) correspondant immédiatement en aval, des moyens de réglage pouvant alors être associés à chaque ventilateur (8) contrôlant ainsi le débit aspiré et le débit refoulé dans chaque cellule (5).

4. Soufflerie selon la revendication 2, caractérisée par le fait qu'il est prévu un seul ventilateur (8) dont l'admission est reliée par un jeu de conduits (11) et de vannes (12) au caisson d'aspiration (9) et dont le refoulement est relié par un jeu de conduits (13) et de vannes (14) au caisson de soufflage (10), des moyens de réglage pouvant alors être associés à chaque vanne (12) et (14), contrôlant ainsi le débit aspiré et soufflé dans chaque cellule (5).

5. Soufflerie selon l'une quelconque des revendications 1 à 4, caractérisée par le fait que les orifices d'aspiration (6) et les orifices de soufflage (7) sont agencés sous forme de fente s'étendant transversalement.

6. Soufflerie selon la revendication 5, caractérisée par le fait que les fentes d'aspiration (6) sont inclinées vers l'amont et par le fait que les fentes de soufflage (7) sont inclinées vers l'aval.

7. Soufflerie selon la revendication 5 ou 6, caractérisée par le fait que la fente d'aspiration (6) est agencée sous forme d'un canal divergent et par le fait que la fente de soufflage (7) est agencée sous forme d'un canal convergent.

8. Soufflerie selon l'une quelconque des revendications 5 à 7 caractérisée par le fait que la paroi amont (6a) de la fente d'aspiration (6) et la paroi aval (7b) de la fente de soufflage (7) sont déplaçables axialement sous l'action de mécanismes (15, 16).

9. Soufflerie selon l'une quelconque des revendications 5 à 7, caractérisée par le fait que la paroi aval (6b) de la fente d'aspiration (6) et la paroi amont (7a) de la fente de soufflage (7), sont déplaçables transversalement sous l'action d'un mécanisme (17).

10. Soufflerie selon l'une quelconque des revendications 5 à 7, caractérisée par le fait que la partie amont de la paroi aval (6b) de la fente d'aspiration (6) est constituée par un volet mobile (18) et par le fait que la partie aval de la paroi amont (7a) de la fente de soufflage (7) est constituée par un volet mobile (19), un mécanisme (20) étant prévu pour l'actionnement de ces deux volets mobiles (18, 19).

## Patentansprüche

1. Aerodynamischer Windkanal, welcher für Versuche zur Simulation eines sich in der Nähe des Bodens fortbewegenden Fahrzeugs bestimmt ist, umfassend eine Meßstrekke (1), welche eine den Boden simulierende Wandung (2) aufweist, in deren Nähe ein Versuchsmodell (3) angeordnet ist, dadurch gekennzeichnet, daß die den Boden simulierende Wandung (2) von einer Aufeinanderfolge unabhängiger Zellen (5) gebildet ist, welche jeweils wenigstens eine Saugöffnung (6) und wenigstens eine entweder stromabwärts oder stromaufwärts der Saugöffnung (6) angeordnete, durch wenigstens ein Gebläse (8) mit dem von der Saugöffnung (6) angesaugten Gas versorgte Blasöffnung (7) umfassen.

2. Windkanal nach Anspruch 1, dadurch gekennzeichnet, daß die Saugöffnung (6) in einen Saugbehälter (9) einmündet und die Blasöffnung (7) von einem Blasbehälter (10) versorgt wird.

3. Windkanal nach Anspruch 2, dadurch gekennzeichnet, daß ein Gebläse (8) zwischen jedem Saugbehälter (9) und dem entsprechenden, unmittelbar stromabwärtigen Blasbehälter (10) vorgesehen ist, wobei dann Steuerungsmittel jedem Gebläse (8) zuordenbar sind, welche auf diese Weise die angesaugte Menge und die rückgestaute Menge in jeder Zelle (5) steuern.

4. Windkanal nach Anspruch 2, dadurch gekennzeichnet, daß ein einziges Gebläse (8) vorgesehen ist, dessen Einlaß über eine Gruppe von Leitungen (11) und von Ventilen (12) mit dem Saugbehälter (9) verbunden ist und dessen Förderseite über eine Gruppe von Leitungen (13) und von Ventilen (14) mit dem Blasbehälter (10) verbunden ist, wobei dann Steuerungsmittel jedem Ventil (12) und (14) zuordenbar sind, welche auf diese Weise die in jede Zelle (5) angesaugte und geblasene Menge steuern.

5. Windkanal nach einem der Ansprüche 1 bis 4, dadurch gekennzeichnet, daß die Saugöffnungen (6) und die Blasöffnungen (7) in Form eines sich transversal erstreckenden Schlitzes ausgebildet sind.

6. Windkanal nach Anspruch 5, dadurch gekennzeichnet, daß die Saugschlitze (6) stromaufwärts geneigt sind und daß die Blasschlitze (7) stromabwärts geneigt sind.

7. Windkanal nach Anspruch 5 oder 6, dadurch gekennzeichnet, daß der Saugschlitz (6) in Form eines divergierenden Kanals ausgebildet ist und daß der Blasschlitz (7) in Form eines konvergierenden Kanals ausgebildet ist.

8. Windkanal nach einem der Ansprüche 5 bis 7, dadurch gekennzeichnet, daß die stromaufwärtige Wandung (6a) des Saugschlitzes (6) und die stromabwärtige Wandung (7b) des Blasschlitzes (7) unter Betätigung von Mechanismen (15,16) axial bewegbar sind.

9. Windkanal nach einem der Ansprüche 5 bis 7, dadurch gekennzeichnet, daß die stromabwärtige Wandung (6b) des Saugschlitzes (6) und die stromaufwärtige Wandung (7a) des Blasschlitzes (7) unter Betätigung eines Mechanismus (17) transversal bewegbar sind.

10. Windkanal nach einem der Ansprüche 5 bis 7, dadurch gekennzeichnet, daß der stromaufwärtige Abschnitt der stromabwärtigen Wandung (6b) des Ansaugschlitzes (6) von einer beweglichen Klappe (18) gebildet ist und daß der stromabwärtige Abschnitt der stromaufwärtigen Wandung (7a) des Blasschlitzes (7) von einer beweglichen Klappe (19) gebildet ist, wobei ein Mechanismus (20) für die Betätigung der beiden beweglichen Klappen (18,19) vorgesehen ist.

## Claims

1. An aerodynamic wind tunnel intended for simulation tests on a mobile device moving near the ground, comprising a test section (1) having a wall (2) which simulates the ground and near which is disposed a test model (3), characterised in that the said wall (2) simulating the ground is formed by a succession of independent cells (5) each comprising at least one intake aperture (6) and at least one blowing aperture (7) situated either downstream or upstream of the intake aperture (6) and fed by means of at least one fan (8) with the gas drawn in through the intake aperture (6).

2. A wind tunnel according to claim 1, characterised in that the intake aperture (6) discharges into an intake box (9) and the blowing aperture (7) is fed by a blowing box (10).

3. A wind tunnel according to claim 2, characterised in that a fan (8) is provided between each intake box (9) and the corresponding immediately downstream blowing box (10), control means being adapted to be associated with each fan (8) in order thus to control the intaken flow and the delivered flow in each cell (5).

4. A wind tunnel according to claim 2, characterised in that a single fan (8) is provided, the intake of which is connected by a set of conduits (11) and valves (12) to the intake box (9) and the delivery of which is connected by a set of conduits (13) and valves (14) to the blowing box (10), control means being adapted to be associated with each valve (12) and (14) in order thus to control the intaken flow and the delivered flow in each cell (5).

5. A wind tunnel according to any one of claims 1 to 4, characterised in that the intake apertures (6) and the blowing apertures (7) are arranged in the form of a slot extending transversely.

6. A wind tunnel according to claim 5, characterised in that the intake slots (6) are inclined upstream and in that the blowing slots (7) are inclined downstream.

7. A wind tunnel according to claim 5 or 6, characterised in that the intake slot (6) is arranged in the form of a divergent duct and in that the blowing slot (7) is arranged in the form of a convergent duct.

8. A wind tunnel according to any one of claims 5 to 7, characterised in that the upstream wall (6a) of the intake slot (6) and the downstream wall (7b) of the blowing slot (7) are axially movable by means of mechanisms (15, 16).

9. A wind tunnel according to any one of claims 5 to 7, characterised in that the downstream wall (6b) of the intake slot (6) and the upstream wall (7a) of the blowing slot (7) are movable transversely by means of a mechanism (17).

10. A wind tunnel according to any one of claims 5 to 7, characterised in that the upstream part of the downstream wall (6b) of the intake slot (6) is formed by a movable flap (18) and in that the downstream part of the upstream wall (7a) of the blowing slot (7) is formed by a movable flap (19), a mechanism (20) being provided to actuate said two movable flaps (18, 19).
